# EUROPÄISCHE PATENTSCHRIFT

(11) **EP 2 794 351 B1**
(45) Veröffentlichungstag und Bekanntmachung des Hinweises auf die Patenterteilung: **21.10.2020**
(21) Anmeldenummer: 12809632.8
(22) Anmeldetag: 29.11.2012
(51) Int. Cl.: B60Q 1/42

(54) **LENKSTOCKSCHALTEREINRICHTUNG FÜR EIN KRAFTFAHRZEUG UND KRAFTFAHRZEUG MIT EINER LENKSTOCKSCHALTEREINRICHTUNG**
STEERING COLUMN SWITCH DEVICE FOR A MOTOR VEHICLE AND A MOTOR VEHICLE HAVING A STEERING COLUMN SWITCH DEVICE
ENSEMBLE DE COMMUTATION SUR COLONNE DE DIRECTION POUR UN VÉHICULE AUTOMOBILE ET VÉHICULE AUTOMOBILE AVEC UN ENSEMBLE DE COMMUTATION SUR COLONNE DE DIRECTION

(30) Priorität: 24.12.2011 DE 102011122405
(43) Veröffentlichungstag der Anmeldung: 29.10.2014
(73) Patentinhaber: Valeo Schalter und Sensoren GmbH, 74321 Bietigheim-Bissingen (DE)
(72) Erfinder: LIPFERT, Rainer, 74076 Heilbronn (DE); HASCH, Martin, 71701 Schwieberdingen (DE); SIMONIS, Karl, 75428 Illingen (DE)
(74) Vertreter: Pothmann, Karsten
(86) Internationale Anmeldenummer: PCT/EP2012/073892
(87) Internationale Veröffentlichungsnummer: WO 2013/092149

(56) Entgegenhaltungen:
- EP-A2- 1 060 949
- FR-A1- 2 872 111
- FR-A2- 2 607 961
- US-A- 6 069 329

## Beschreibung

Die Erfindung betrifft eine Lenkstockschaltereinrichtung für ein Kraftfahrzeug, mit einem Mitnehmerteil, mit welchem ein - vom Fahrer betätigbares - Betätigungshebel verbindbar ist, und welches um eine Schwenkachse zwischen einer Ausgangsstellung und einer Betätigungsstellung schwenkbar gelagert ist, wobei das Mitnehmerteil einen sich senkrecht zur Schwenkachse, insbesondere in Richtung zu einer Lenkspindel hin, erstreckenden und von einem Grundkörper des Mitnehmerteils abstehenden Arm aufweist, an welchem ein elektrisches Kontaktelement angeordnet ist, welches in der Betätigungsstellung mit einem weiteren Kontaktelement elektrisch koppelbar ist, welches an einer Platine angebracht ist. Die Lenkstockschaltereinrichtung umfasst auch eine Rückstellvorrichtung mit einem Auslöseelement, welches zum automatischen Rückstellen des Mitnehmerteils und hierdurch des Betätigungshebels aus der Betätigungsstellung in die Ausgangsstellung ausgebildet ist. Die Erfindung betrifft auch ein Kraftfahrzeug.

Eine gattungsgemäße Lenkstockschaltereinrichtung ist aus dem Dokument FR 2 607 961 A2 bekannt.

Rückstellvorrichtungen für Lenkstockschalter - so genannte Blinkerrückstellungen - sind bereits Stand der Technik. So beschreibt beispielsweise die Druckschrift US 6 186 022 B1 eine derartige Rückstellvorrichtung, welche ein Auslöseelement in Form einer Zunge bzw. eines Fingers aufweist, die/der beim Drehen des Lenkrades mitgenommen wird und dann das Rückstellen des Lenkstockschalters bzw. des Betätigungshebels in seine Ausgangsstellung bewirkt. Dabei ist dieses Auslöseelement einerseits schwenkbar gelagert; andererseits ist es auch verschieblich gelagert, und zwar in einer Schieberichtung, in welcher das Auslöseelement auch mittels eines Federelements vorgespannt angeordnet ist. Wird das Auslöseelement beim Drehen des Lenkrades mitgenommen, drückt das Auslöseelement den Lenkstockschalter wieder in seine Ausgangposition.

Eine Rückstellvorrichtung für einen Lenkstockschalter ist außerdem aus dem Dokument DE 694 14 867 T2 als bekannt zu entnehmen.

Eine Rückstellvorrichtung ist auch im Dokument DE 44 18 328 A1 offenbart. Diese Rückstellvorrichtung weist zusätzlich noch eine Überschaltsicherung auf, welche im Überschaltfall - wenn der Fahrer eine Kraft auf den Lenkstockschalter beim Rückdrehen des Lenkrades ausübt - eine Bewegung des Auslöseelements relativ zum Betätigungshebel ermöglicht und somit eine Zerstörung des Auslöseelements verhindert. Diese Überschaltsicherung beinhaltet in der Regel eine Überschaltfeder, welche bei einer gewissen Kraft nachgibt und somit eine Zerstörung der Rückstelleinrichtung verhindert.

Als nachteilig an dem Stand der Technik ist der Umstand anzusehen, dass bewirkt durch eine Anordnung der Rückstellvorrichtung - und insbesondere des Auslöseelements - in einem Schalterdeckel zwei getrennte bzw. mehrere getrennte Leiterplatten für die elektronischen Komponenten erforderlich sind. Das elektrische Kontaktelement des Schalters muss nämlich von einem Steuergerät räumlich getrennt auf einer separaten Platine angeordnet sein.

Es ist Aufgabe der Erfindung, eine Lösung aufzuzeigen, wie bei einer Lenkstockschaltereinrichtung der eingangs genannten Gattung der zur Verfügung stehende Bauraum gespart werden kann, und insbesondere der Einsatz von separaten Leiterplatten verhindert werden kann.

Diese Aufgabe wird erfindungsgemäß durch eine Lenkstockschaltereinrichtung sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Lenkstockschaltereinrichtung für ein Kraftfahrzeug umfasst ein Mitnehmerteil, mit welchem ein Betätigungshebel verbindbar ist und welches um eine Schwenkachse zwischen einer Ausgangsstellung und einer Betätigungsstellung schwenkbar gelagert ist, nämlich insbesondere relativ zu einem Lenksäulenteil, in welchem die Lenkspindel drehbar gelagert ist. Das Mitnehmerteil weist einen sich senkrecht zur Schwenkachse erstreckenden, insbesondere in Richtung zur Lenkspindel hin zeigenden, und von einem Grundkörper des Mitnehmerteils abstehenden Arm auf, an welchem ein elektrisches Kontaktelement angeordnet ist, welches in der Betätigungsstellung mit einem weiteren Kontaktelement elektrisch koppelbar ist. Die Lenkstockschaltereinrichtung weist außerdem eine Rückstellvorrichtung mit einem Auslöseelement auf, welche zum Rückstellen des Mitnehmerteils und hierdurch des Betätigungshebels aus der Betätigungsstellung in die Ausgangsstellung ausgebildet ist. Erfindungsgemäß ist vorgesehen, dass das Auslöseelement auf einer dem elektrischen Kontaktelement gegenüberliegenden Seite des Arms angeordnet ist.

Ein Kerngedanke der Erfindung besteht somit mit anderen Worten darin, dass auf der einen Seite des Arms das elektrische Kontaktelement angeordnet ist, während auf der anderen Seite die Rückstellvorrichtung, nämlich das Auslöseelement der Rückstellvorrichtung, angeordnet ist. Somit wird eine Doppelfunktionalität des Armes des Mitnehmerteils geschaffen, sodass ein und derselbe Arm einerseits das elektrische Kontaktelement trägt und andererseits auch beispielsweise für die Führung des Auslöseelements der Rückstellvorrichtung sorgt. An einem gemeinsamen Arm ist somit einerseits das zumindest eine Kontaktelement und andererseits auch das Auslöseelement angeordnet. Durch eine solche Ausgestaltung des Mitnehmerteils ist eine gemeinsame Leiterplatte bzw. Platine eingesetzt, an welcher sowohl das weitere Kontaktelement - also ein Schalter - als auch die weiteren elektronischen Komponenten angeordnet sind, wie etwa ein Steuergerät und dergleichen. Es brauchen keine zusätzlichen Platinen eingesetzt zu werden. Dies hat insbesondere den Vorteil, dass der zur Verfügung stehende Bauraum gespart werden kann und außerdem die Anzahl der Komponenten auf ein Minimum reduziert werden kann, sodass eine robuste und zuverlässige Lenkstockschaltereinrichtung ermöglicht wird.

Vorzugsweise ist an dem Arm eine Führung, insbesondere eine Kulisse, für einen Zapfen des genannten Auslöseelements ausgebildet, entlang welcher beim Bewegen des Betätigungshebels zwischen der Ausgangsstellung und der Betätigungsstellung der Zapfen bewegbar ist. Somit übernimmt ein und derselbe Arm zwei unterschiedliche Funktionen: einerseits die Funktion des Tragens des elektrischen Kontaktelements und andererseits auch die Funktion der Führung der Rückstellvorrichtung. Es erübrigt sich somit der Einsatz von weiteren Armen mit den damit verbundenen Nachteilen.

Die Führung, insbesondere die Kulisse, ist bevorzugt an einer Seite des Arms ausgebildet, welcher dem elektrischen Kontaktelement gegenüberliegt bzw. vom Kontaktelement abgewandt ist. Auf der Seite des Kontaktelements steht somit genügend Bauraum für die Platine und auch für weitere Kontaktelemente zur Verfügung.

Die Rückstellvorrichtung ist vorzugsweise an einem Rastteil angeordnet bzw. in das Rastteil integriert, welches eine Raststruktur zum Einrasten des Betätigungshebels in seiner Betätigungsstellung aufweist. Somit ist die Lenkstockschaltereinrichtung besonders kompakt.

Erfindungsgemäß ist der Arm zwischen der Platine einerseits und der Rückstellvorrichtung andererseits angeordnet. Insbesondere erstreckt sich der Arm dabei im Wesentlichen Parallel zu der Platine und insbesondere auch parallel zu dem Auslöseelement der Rückstellvorrichtung, sodass insgesamt eine Sandwich-Struktur geschaffen wird, bei welcher der Arm des Mitnehmerteils in einem Zwischenraum zwischen der Platine einerseits und der Rückstellvorrichtung bzw. dem Auslöseelement andererseits angeordnet ist und den Abstand zwischen der Platine und der Rückstellvorrichtung überbrückt. Eine solche Anordnung hat den Vorteil, dass die Platine auch elektronische Komponenten für andere Lenkstockschalter tragen kann, sodass die Platine eine für mehrere Lenkstockschalter gemeinsame Platine ist.

Der Arm steht also von dem Grundkörper des Mitnehmerteils ab, und zwar insbesondere in Richtung zur Lenkspindel hin. Der Arm weist also in Richtung zur Lenkspindel, also in eine Richtung senkrecht zur Schwenkachse des Mitnehmerteils. Dabei steht der Arm vorzugsweise von einem Bereich des Grundkörpers ab, welcher einen - entlang der Schwenkachse gesehen - äußeren Rand des Grundkörpers bildet. Der Arm schließt dabei insbesondere mit dem Grundkörper bündig ab. Der Arm ist insbesondere auch plattenförmig bzw. als ein flaches Element ausgeführt.

Wie bereits ausgeführt, weist die Rückstellvorrichtung ein Auslöseelement auf, mittels welchem das Mitnehmerteil aus der Betätigungsstellung in die Ausgangsstellung bringbar ist und welches an einem Zwischenstück zwischen einer Ruhestellung und einer Auslösestellung, in welcher das Mitnehmerteil in die Ausgangsstellung bringbar ist, um eine Schwenkachse schwenkbar gelagert ist. Das Auslöseelement kann an dem Zwischenstück außerdem in einer Schieberichtung senkrecht zur Schwenkachse verschiebbar gelagert sein, und es kann ein Federelement vorgesehen sein, welches zum Erzeugen einer parallel zur Schieberichtung wirkenden Federkraft ausgebildet ist, mit welcher das Auslöseelement an dem Zwischenstück vorgespannt angeordnet ist. Insbesondere erstreckt sich das Auslöseelement senkrecht zu der Lenkspindel und kann beim Drehen des Lenkrades mitgenommen werden, sodass beim Drehen des Lenkrades das Auslöseelement geschwenkt wird und somit das Mitnehmerteil aus der Betätigungsposition in die Ausgangsposition drückt. Somit ist eine Rückstellung des Mitnehmerteils auf technisch einfache und besonders zuverlässige Weise möglich.

Das Zwischenstück weist bevorzugt eine senkrecht zur Schwenkachse ausgebildete Führungsfläche auf, an welcher das Auslöseelement gelagert bzw. abgestützt ist. Es können dabei Mittel vorgesehen sein, welche das Auslöseelement gegen die Führungsfläche in Richtung parallel zur Schwenkachse drücken. Das Auslöseelement kann also an einer Führungsfläche des Zwischenstücks anliegend angeordnet sein, welche senkrecht zur Schwenkachse des Auslöseelements ausgebildet ist, wobei Druckmittel vorgesehen sein können, durch welche das Auslöseelement gegen die Führungsfläche - also in Richtung parallel zur Schwenkachse - gedrückt wird. Somit wird eine spielfreie Anordnung des Auslöseelements an dem Zwischenstück in Richtung der Schwenkachse ermöglicht. Es hat sich nämlich herausgestellt, dass bei einer solchen Anordnung keine Klappergeräusche beim Rückstellen des Betätigungshebels entstehen. Hierdurch wird erreicht, dass der Fahrer keine störenden Geräusche wahrnimmt, wodurch wiederum der Fahrkomfort beim Führen des Kraftfahrzeugs verbessert wird.

Die genannten Mittel können derart ausgebildet sein, dass eine Federkraft auf das Auslöseelement gegen die Führungsfläche wirkt, so dass die Federkraft das Auslöseelement gegen die Führungsfläche drückt bzw. vorspannt. Es kann insbesondere die Federkraft des genannten Federelements sein, welche eine Kraftkomponente in Richtung parallel zur Schwenkachse des Auslöseelements aufweist und somit das Auslöseelement gegen die Führungsfläche drückt. Durch eine Federkraft können Toleranzen ausgeglichen werden, so dass stets eine spielfreie Anordnung bzw. Lagerung des Auslöseelements an dem Zwischenstück ermöglicht wird.

In einer bevorzugten Ausführungsform der Erfindung ist vorgesehen, dass an dem Zwischenstück ein Schiebeelement in der Schieberichtung verschiebbar gelagert ist, welches einerseits über das Federelement an einer Wandung des Zwischenstücks und andererseits an dem Auslöseelement abgestützt ist, so dass über das Schiebeelement die Federkraft des Federelements auf das Auslöseelement aufgebracht ist und somit das Auslöseelement an dem Zwischenstück in Schieberichtung vorgespannt angeordnet ist. Mit einem derartigen Schiebeelement kann einerseits die Vorspannung des Auslöseelements in der Schieberichtung ohne viel Aufwand und kompakt realisiert werden; andererseits kann somit das Auslöseelement auch wirkungsvoll gegen die Führungsfläche gedrückt werden.

Das Schiebeelement und/oder das Federelement ist/sind bevorzugt ein Bestandteil der oben genannten Mittel, welche das Auslöseelement gegen die Führungsfläche drücken.

Besonders bevorzugt weist das Schiebeelement einen senkrecht zur Schwenkachse abstehenden und in Richtung zum Auslöseelement hin weisenden Fortsatz auf, welcher zumindest bereichsweise an einer von der Führungsfläche abgewandten Seite des Auslöseelements anliegt und das Auslöseelement gegen die Führungsfläche in Richtung parallel zur Schwenkachse drückt. Mit einem derartigen Fortsatz kann eine Kraftkomponente des Federelements in Richtung parallel zur Schwenkachse erzeugt werden, so dass sich der Einsatz eines zusätzlichen Federelements mit den damit verbundenen Nachteilen hinsichtlich Kosten und Bauraum erübrigt. Die Federkraft des ohnehin vorhandenen Federelements kann durch einen solchen Fortsatz in zwei Kraftkomponenten aufgeteilt werden, nämlich eine Kraftkomponente in der Schieberichtung sowie eine Kraftkomponente in der Richtung parallel zur Schwenkachse.

Es hat sich dabei als vorteilhaft erwiesen, wenn der Fortsatz eine Abstützschräge aufweist, an welcher das Auslöseelement abgestützt ist. Gerade dann kann ohne viel Aufwand erreicht werden, dass eine Kraftkomponente des sich in der Schieberichtung erstreckenden Federelements in Richtung parallel zur Schwenkachse und somit senkrecht zur Schieberichtung erzeugt wird. Außerdem ermöglicht die Abstützschräge, dass die jeweiligen, einander zugewandten Stirnseiten des Schiebeelements einerseits und des Auslöseelements andererseits in einem geringen Abstand zueinander angeordnet sind, so dass die Federkraft über die Abstützschräge - insbesondere ausschließlich über die Abstützschräge - auf das Auslöseelement übertragen wird. Diese Federkraft besitzt dann - wie bereits ausgeführt - eine Kraftkomponente in der Schieberichtung sowie eine Kraftkomponente senkrecht dazu, durch welche das Auslöseelement gegen die Führungsfläche gedrückt wird. Insbesondere verläuft die Abstützschräge in einem Winkel von 30° bis 60° zu der Schieberichtung bzw. der Schwenkachse.

Das Schiebeelement kann sich durch eine in dem Zwischenstück ausgebildete Durchgangsöffnung hindurch erstrecken, und das Schiebeelement kann an einer weiteren Führungsfläche des Zwischenstücks verschiebbar gelagert sein, welche an einer der Führungsfläche für das Auslöseelement gegenüber liegenden Seite des Zwischenstücks ausgebildet ist. Somit kann erreicht werden, dass das Auslöseelement quasi zwischen seiner Führungsfläche einerseits und dem oben genannten Fortsatz des Schiebeelements andererseits geklemmt ist, während das Schiebeelement über die Durchgangsöffnung des Zwischenstücks hindurch die weitere Führungsfläche hintergreift. Somit ist eine stabile und rutschfeste Anordnung des Schiebeelements sowie des Auslöseelements an dem Zwischenstück gewährleistet.

Das Schiebeelement und das Auslöseelement weisen bevorzugt jeweilige, einander zugewandte Stirnseiten auf. Eine der Stirnseiten, nämlich insbesondere die des Schiebeelements, weist bevorzugt eine konvexe Krümmung auf, während die andere Stirnseite vorzugsweise eine konkave Krümmung aufweist. Es kann hier vorgesehen sein, dass der Radius der konvexen Krümmung größer oder gleich dem Radius der konkaven Krümmung ist. Somit kann erreicht werden, dass beim Rückstellen des Betätigungshebels in seine Ausgangsstellung die Klatschgeräusche auf ein Minimum reduziert werden. Somit kann nämlich verhindert werden, dass die beiden Stirnseiten, welche vorzugsweise aufgrund der Abstützschräge in einem kleinen Abstand zueinander gehalten werden, beim Rückstellen des Betätigungshebels in Kontakt miteinander geraten und ein Geräusch verursachen.

In einer Ausführungsform weist das Auslöseelement ein länglich ausgeführtes und sich senkrecht zur Schwenkachse, insbesondere in der Schieberichtung erstreckendes Zungenelement auf, welches beim Auslenken aus der Kurve bzw. beim Drehen des Lenkrades mitgenommen wird und welches den Betätigungshebel des Lenkstockschalters in die Ausgangsstellung bewegt. Von dem Zungenelement kann ein Lagerteil parallel zur Schwenkachse abstehen, über welches die Schwenkachse verläuft sowie über welches das Auslöseelement an dem Zwischenstück gelagert ist. Es kann das Lagerteil sein, welches an der Führungsfläche des Zwischenstücks anliegt und somit an dem Zwischenstück schwenkbar gelagert ist. Dieses Lagerteil ist insbesondere einstückig mit dem Zungenelement ausgebildet. Durch eine solche Ausgestaltung des Auslöseelements kann eine räumliche Trennung zwischen dem Zungenelement einerseits und dem Zwischenstück bzw. dem Lagerteil andererseits erreicht werden, so dass das Zwischenstück selbst sogar in einem beliebigen Abstand zum Zungenelement angeordnet sein kann, wobei hierdurch die ordnungsgemäße Funktionsweise der Rückstellvorrichtung nicht beeinträchtigt wird.

Die Führungsfläche für das Auslöseelement ist bevorzugt an einer vom Zungenelement abgewandten Seite des Zwischenstücks ausgebildet, und das Zwischenstück weist vorzugsweise eine Durchgangsöffnung auf, durch welche sich das Lagerteil hindurch erstreckt und die Führungsfläche hintergreift. Somit ist eine stabile und wackelfreie bzw. spielfreie Anordnung des Auslöseelements in Richtung parallel zur Schwenkachse des Auslöseelements ermöglicht.

Vorzugsweise weist die Lenkstockschaltereinrichtung eine Überschaltsicherungseinrichtung mit zumindest einer Überschaltfeder auf, welche in einem Überschaltfall eine Bewegung des Zwischenstücks relativ zu dem Betätigungshebel ermöglicht. Durch eine derartige Überschaltsicherungseinrichtung wird die Rückstellvorrichtung, nämlich insbesondere das Auslöseelement, vor einer Beschädigung geschützt.

Es erweist sich als besonders vorteilhaft, wenn die zumindest eine Überschaltfeder und das Federelement in einer Richtung senkrecht zur Schieberichtung nebeneinander angeordnet sind. Dies bedeutet insbesondere, dass die Überschaltfeder und das Federelement derart auf der gleichen Höhe angeordnet sind, dass eine Projektion der Überschaltfeder in einer Richtung senkrecht zu ihrer Federachse bzw. senkrecht zur Schieberichtung auf das Federelement existiert. Insbesondere sind die Überschaltfeder und das Federelement parallel nebeneinander angeordnet. Im Gegensatz zum Stand der Technik - dort sind das Federelement und die Überschaltfeder beispielsweise in Serie bzw. in Reihe angeordnet - wird durch diese Ausführungsform eine besonders kurze und kompakte Anordnung der beiden federnden Elemente erzielt, was insbesondere Vorteile im Hinblick auf den Toleranzausgleich hat. Die Überschaltfeder und das Federelement können insbesondere derart relativ zueinander angeordnet sein, dass zumindest ein überwiegender Längenbereich des Federelements - insbesondere das gesamte Federelement - die Überschaltfeder in einer Richtung senkrecht zur Federachse überlappt.

Die Überschaltsicherungseinrichtung kann an einem Rastteil angeordnet sein, welches eine Raststruktur zum Einrasten des Betätigungshebels in der Betätigungsstellung aufweist. Durch die Integration der Überschaltsicherungseinrichtung in das Rastteil wird eine besonders kompakte Anordnung geschaffen.

Ein erfindungsgemäßes Kraftfahrzeug weist eine erfindungsgemäße Lenkstockschaltereinrichtung auf. Die mit Bezug auf die erfindungsgemäße Lenkstockschaltereinrichtung vorgestellten bevorzugten Ausführungsformen und deren Vorteile gelten entsprechend für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen gemäß den beiliegenden Ansprüchen verwendbar.

Die Erfindung wird nun anhand eines bevorzugten Ausführungsbeispiels, wie auch unter Bezugnahme auf die beigefügten Zeichnungen näher erläutert.

Es zeigen:
- Fig. 1: in schematischer und perspektivischer Darstellung eine Lenkstockschaltereinrichtung gemäß einer Ausführungsform der Erfindung;
- Fig. 2: in schematischer und perspektivischer Darstellung eine vergrößerte Ansicht der Lenkstockschaltereinrichtung gemäß Fig. 1;
- Fig. 3: in schematischer und perspektivischer Darstellung die Lenkstockschaltereinrichtung mit einer Platine;
- Fig. 4: in schematischer Darstellung eine Seitenansicht der Lenkstockschaltereinrichtung;
- Fig. 5: in schematischer und perspektivischer Darstellung einzelne Komponenten einer Rückstellvorrichtung gemäß einer Ausführungsform der Erfindung;
- Fig. 6 bis 8: unterschiedliche Ansichten der Rückstellvorrichtung;
- Fig. 9 und 10: unterschiedliche Ausführungsformen der Rückstellvorrichtung;
- Fig. 11: in schematischer und perspektivischer Darstellung die Rückstellvorrichtung mit einem Mitnehmerteil, welches einen von einem Grundkörper abstehenden Arm aufweist;
- Fig. 12: in schematischer und perspektivischer Darstellung die Rückstellvorrichtung, wobei ein Auslöseelement an dem Mitnehmerteil angeordnet ist;
- Fig. 13: in schematischer und perspektivischer Darstellung eine Rückstellvorrichtung gemäß einer Ausführungsform der Erfindung, wobei einzelne Komponenten näher dargestellt sind;
- Fig. 14 bis 19: unterschiedliche Ansichten der Rückstellvorrichtung; und
- Fig. 20a bis c: jeweils eine Draufsicht auf die Lenkstockschaltereinrichtung, wobei eine Rückstellung des Mitnehmerteils und somit eines Betätigungshebels näher erläutert wird.

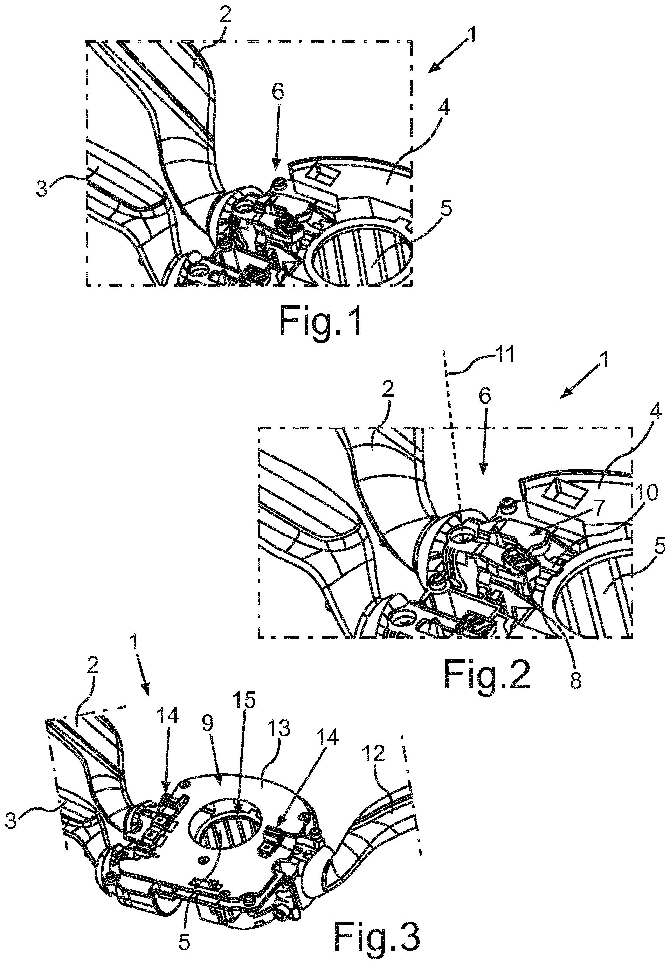

In Fig. 1 ist in schematischer und perspektivischer Darstellung eine Lenkstockschaltereinrichtung 1 dargestellt, welche in einem Kraftfahrzeug eingebaut werden kann. Die Lenkstockschaltereinrichtung 1 weist hier einen ersten und einen zweiten Betätigungshebel 2, 3 auf, wobei beispielsweise der erste Betätigungshebel 2 zum Aktivieren eines Blinkers des Kraftfahrzeugs dient. Die Betätigungshebel 2, 3 sind an einem Lenksäulenteil 4 schwenkbar gelagert, in welchem eine Aufnahme 5 für eine Lenkspindel ausgebildet ist. Die Aufnahme 5 ist im Querschnitt etwa kreisförmig ausgebildet und stellt quasi eine Hülse für die Lenkspindel dar. Zumindest dem ersten Betätigungshebel 2, welcher zum Aktivieren eines Blinkers dient, ist eine Rückstellvorrichtung 6 zugeordnet, mittels welcher der Betätigungshebel 2 aus seiner Betätigungsstellung, in welcher der Blinker aktiviert ist, in eine Ausgangsstellung, in welcher der Blinker deaktiviert ist, bewegbar ist, und zwar automatisch alleine durch Drehen des nicht dargestellten Lenkrades. Es sind dabei selbstverständlich zwei Betätigungsstellungen vorgesehen, nämlich eine für den linken Blinker und eine für den rechten Blinker.

In Fig. 2 ist die Rückstellvorrichtung 6 in einer vergrößerten Darstellung gezeigt. Der Rückstellvorrichtung 6 ist ein Mitnehmerteil 7 zugeordnet, an welchem elektrische Kontaktelemente 8 angebracht sind.

Wird der Betätigungshebel 2 in seine Betätigungsstellung bewegt, so kontaktieren die elektrischen Kontaktelement 8 korrespondierende Kontaktelemente, die an einer Platine 9 (siehe Fig. 3) angeordnet sind. Die Kontaktelemente 8 sind dabei an einer Seite des Mitnehmerteils 7 angeordnet, die im Betrieb des Kraftfahrzeugs dem Fahrer zugewandt ist.

Wie aus Fig. 2 weiterhin hervorgeht, beinhaltet die Rückstellvorrichtung 6 ein Auslöseelement 10, welches beim Drehen des Lenkrades beim Auslenken aus der Kurve von einem mit der Lenkspindel verbundenen Element mitgenommen und somit verschwenkt wird. Das Auslöseelement 10 drückt dabei das Mitnehmerteil 7, sodass der Betätigungshebel 2 in die Ausgangsstellung gebracht wird.

Das Mitnehmerteil 7 ist nämlich an dem Lenksäulenteil 4 schwenkbar gelagert, und zwar um eine parallel zur Lenkspindel verlaufende Schwenkachse 11. Außerdem ist der Betätigungshebel 2 mit dem Mitnehmerteil 7 verbunden. Dabei kann ebenfalls vorgesehen sein, dass eine relative Schwenkbewegung des Betätigungshebels 2 relativ zum Mitnehmerteil 7 möglich ist. Entscheidend ist allerdings, dass das Mitnehmerteil beim Schwenken des Betätigungshebels 2 von der Ausgangsstellung in die Betätigungsstellung auch mit bewegt bzw. mit geschwenkt wird. Somit ist auch das Mitnehmerteil 7 zwischen der Ausgangsstellung und der Betätigungsstellung schwenkbar, und zwar um die Schwenkachse 11.

In Fig. 3 ist die Lenkstockschaltereinrichtung 1 mit der Platine 9 dargestellt, wobei ein weiterer Betätigungshebel 12 ebenfalls erkennbar ist. Mit diesem Betätigungshebel 12 kann beispielsweise ein Scheibenwischer bzw. auch weitere Funktionen im Kraftfahrzeug aktiviert werden.

Wie aus Fig. 3 hervorgeht ist die Platine 9 eine für alle Betätigungshebel 2, 3, 12 gemeinsame Leiterplatte, sodass keine weiteren Platinen eingesetzt werden müssen. Auf der Platine 9 sind an der vom Mitnehmerteil 7 abgewandten Seite 13 elektronische Komponenten 14 angebracht, wie beispielsweise Steuergeräte, elektrische Schalter und dergleichen.

Die Platine 9 weist eine kreisförmige Durchgangsöffnung 15 auf, durch welche sich die Lenkspindel hindurch erstreckt (in Fig. 3 nicht dargestellt). Diese Durchgangsöffnung 15 ist konzentrisch zu der Aufnahme 5 für die Lenkspindel angeordnet.

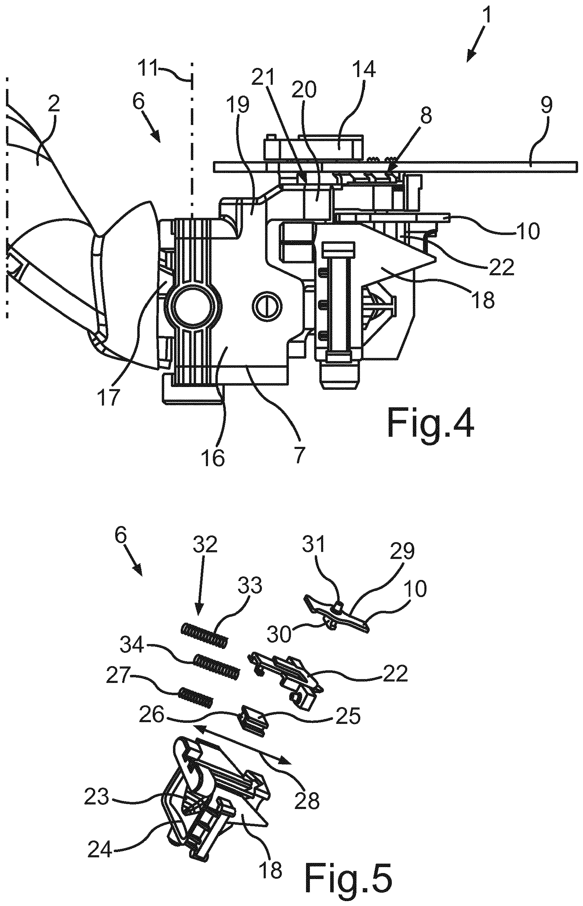

In Fig. 4 ist eine Seitenansicht der Rückstellvorrichtung 6 näher dargestellt. Hier ist die Ausgestaltung des Mitnehmerteils 7 besonders gut zu erkennen. Das Mitnehmerteil 7 weist einen Grundkörper 16 auf, welcher ein Hohlkörper ist und durch welchen sich ein Rastbolzen 17 des Betätigungshebels 2 hindurch erstreckt. Der Rastbolzen 17 erstreckt sich dabei bis zu einem Rastteil 18 hin, an welchem eine Raststruktur zum Einrasten des Rastbolzens 17 in der Betätigungsstellung sowie der Ausgangsstellung ausgebildet ist. Diese Raststruktur ist an einer dem Betätigungshebel 2 zugewandten Seite des Rastteils 18 ausgebildet. Der Rastbolzen 17 mündet also an der Raststruktur bzw. gleitet an dieser und kann in dort ausgebildete Rastvertiefungen einrasten.

Von einem der Platine 9 zugewandten Rand 19 des Grundkörpers 16 des Mitnehmerteils 7 steht ein im Wesentlichen plattenförmig ausgeführter Arm 20 ab, der sich in Richtung senkrecht zur Schwenkachse 11 des Mitnehmerteils 7 erstreckt und in Richtung zur Lenkspindel hin zeigt. Der Arm 20 ist also ein plattenförmiges, relativ flach ausgeführtes Element, welches mit dem Grundkörper 16 bzw. dem Rand 19 des Grundkörpers 16 bündig abschließt. An einer der Platine 9 zugewandten und von dem Auslöselement 10 abgewandten Seite 21 des Arms 20 sind die elektrischen Kontaktelemente 8 angebracht, welche korrespondierende Kontaktelemente der Platine 9 kontaktieren können, und zwar in der Betätigungsstellung. An der dem Arm 20 zugewandten Seite der Platine 9 sind nämlich die korrespondierenden Kontaktelemente angebracht, welche mit den Kontaktelementen 8 elektrisch verbunden werden können.

An der von dem Arm 20 abgewandten Seite der Platine 9 sind hingegen die elektronischen Komponenten 14 angebracht.

Auf der den Kontaktelementen 8 gegenüberliegenden Seite des Arms 20 befindet sich das Auslöseelement 10 zum Rückstellen des Betätigungshebels 2. Dieses Auslöseelement 10 ist mit seinem Zapfen an einer Kulisse des Armes 20 gelagert, was weiter unten näher beschrieben wird.

Auf der den Kontaktelementen 8 gegenüberliegenden Seite des Arms 20 befindet sich außerdem das Rastteil 18, wie auch ein in Fig. 4 nicht in seiner Gesamtheit dargestelltes Zwischenstück 22. An diesem Zwischenstück 22 ist das Auslöseelement 10 gelagert.

In Fig. 5 sind einige Komponenten der Rückstellvorrichtung 6 näher dargestellt. Wie bereits ausgeführt, weist das Rastteil 18 eine Raststruktur 23 auf, welche an einer dem Betätigungshebel 2 zugewandten Seite 24 des Rastteils 18 ausgebildet ist. Diese Raststruktur 23 kann beispielsweise Rastöffnungen beinhalten, in welche der Rastbolzen 17 des Betätigungshebels 2 einrastet, und zwar in der Betätigungsstellung und der Ausgangsstellung. Die Rückstellvorrichtung 6 umfasst außerdem ein Schiebeelement 25 mit einer Hülse 26, in welche ein Federelement 27 in Form einer Spiralfeder aufgenommen werden kann. Wie weiter unten noch näher beschrieben werden wird, kann das Schiebeelement 25 entweder an dem Rastteil 18 oder aber an dem Zwischenstück 22 verschiebbar gelagert sein, nämlich in einer senkrecht zur Schwenkachse 11 orientierten Schieberichtung 28. An dem Zwischenstück 22 ist außerdem das Auslöseelement 10 schwenkbar und verschiebbar gelagert. Das Auslöseelement 10 weist dabei ein Zungenelement 29 auf, welches in Form eines Streifens und damit länglich ausgeführt ist. Das Zungenelement 29 weist also die Form eines Stäbchens auf, von welchem ein Lagerteil 30 senkrecht absteht, über welches das Auslöseelement 10 an dem Zwischenstück 22 gelagert ist. Die nähere Ausgestaltung des Auslöseelements 10 wird weiter unten näher beschrieben. Das Auslöseelement 10 weist auch einen Zapfen 31 auf, welcher an der dem Lagerteil 30 gegenüberliegenden Seite des Zungenelements 29 absteht und mit dem Lagerteil 30 fluchtet.

Zur Rückstellvorrichtung 6 gehört außerdem eine Überschaltsicherungseinrichtung 32, welche im Ausführungsbeispiel zwei Überschaltfelder 33, 34 umfasst. Die beiden Überschaltfedern 33, 34 sind als Spiralfedern ausgebildet. Einerseits werden diese Überschaltfedern 33, 34 an dem Zwischenstück 22 abgestützt; andererseits werde sie an dem Rastteil 18 abgestützt und erstrecken sich dabei entlang der Schieberichtung 28.

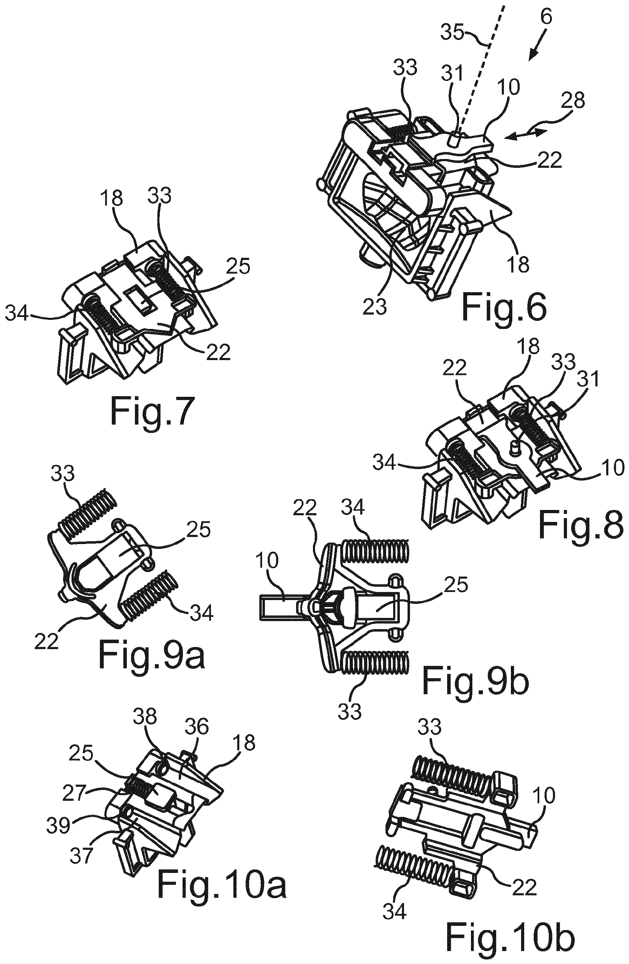

In den Figuren 6 bis 8 sind unterschiedliche Ansichten des Rastteils 18 mit dem daran angebrachten Zwischenstück 22 dargestellt. Das Rastteil 18 ist bei der Lenkstockschaltereinrichtung 1 ein bezüglich des Lenksäulenteils 4 unbewegliches Bauteil, d. h. das Rastteil 18 stellt quasi ein ortsfestes Element dar, bezüglich dessen das Mitnehmerteil 7 geschwenkt wird. Demgegenüber ist das Auslöseelement 10 an dem Zwischenstück 22 und somit auch bezüglich des Rastteils 18 schwenkbar gelagert, und zwar um eine parallel zur Schwenkachse 11 verlaufende Schwenkachse 35. Außerdem ist das Auslöseelement 10 auch in der Schieberichtung 28 senkrecht zur Schwenkachse 35 verschiebbar gelagert und dabei mittels des Federelements 27 federnd vorgespannt.

Auch das Zwischenstück 22 ist an dem Rastteil 18 beweglich gelagert, und zwar über die Überschaltfedern 33, 34. Diese Relativbewegung zwischen dem Zwischenstück 22 und dem Rastteil 18 wird jedoch erst in einem Überschaltfall bewirkt.

In Fig. 7 ist das Zwischenstück 22 ohne das Auslöseelement 10 dargestellt, sodass auch das Schiebeelement 25 erkennbar ist. Das Federelement 27 befindet sich dabei in der Hülse 26 des Schiebeelements 25 (siehe Fig. 5). Wie aus den Figuren 9a und 9b hervorgeht, kann sowohl das Schiebeelement 25 als auch das Auslöseelement 10 an dem Zwischenstück 22 gelagert sein. Alternativ kann vorgesehen sein, dass das Schiebeelement 25 an dem Rastteil 18 gelagert ist, während das Auslöseelement 10 an dem Zwischenstück 22 gelagert ist. Eine solche Ausgestaltung ist in den Figuren 10a und 10b dargestellt. In Fig. 10a ist außerdem das Federelement 27 zu erkennen. Unabhängig von der Ausgestaltung - sei es bei der Anordnung gemäß den Figuren 9a und 9b, sei es bei der Anordnung gemäß den Figuren 10a, 10b - ist die Funktionsweise der Rückstellvorrichtung 6 gleich.

Wie insbesondere aus Fig. 10a hervorgeht, weist das Rastteil 18 in allen Ausführungsformen zwei entlang der Schieberichtung 28 länglich ausgeführte Nuten 36, 37 auf, welche an einer dem Zwischenstück 22 zugewandten Seite des Rastteils 18 ausgebildet sind. Diese Nuten 36, 37 dienen zur Aufnahme der Überschaltfedern 33, 34 und haben somit eine an die Form der Federn angepasste Form. Die Nuten 36, 37 sind mit Abstützelementen 38, 39 begrenzt, an denen die jeweiligen Überschaltfedern 33, 34 abgestützt sind.

In allen Ausführungsformen ist vorgesehen, dass - wie aus den Figuren hervorgeht - das Federelement 27 auf der Höhe der Überschaltfedern 33, 34 angeordnet ist. Das Federelement 27 liegt dabei parallel zu den Überschaltfedern 33, 34 und in Richtung quer zur Federachse auch neben den Überschaltfedern 33, 34. Dies bedeutet, dass eine senkrecht zur Schieberichtung 28 verlaufende gedachte Linie, welche das Federelement 27 schneidet, auch senkrecht durch die Überschaltfedern 33, 34 verläuft. Eine solche Anordnung der Überschaltfedern 33, 34 auf den beiden Seiten des Federelements 27, sodass dieses Federelement 27 zwischen den Überschaltfedern 33, 34 angeordnet ist und die Federachse des Federelements 27 sich parallel zu den Achsen der Überschaltfedern 33, 34 erstreckt, sorgt insbesondere für eine kompakte Ausgestaltung der Rückstellvorrichtung 6 und hat außerdem Vorteile hinsichtlich der mechanischen Toleranzen.

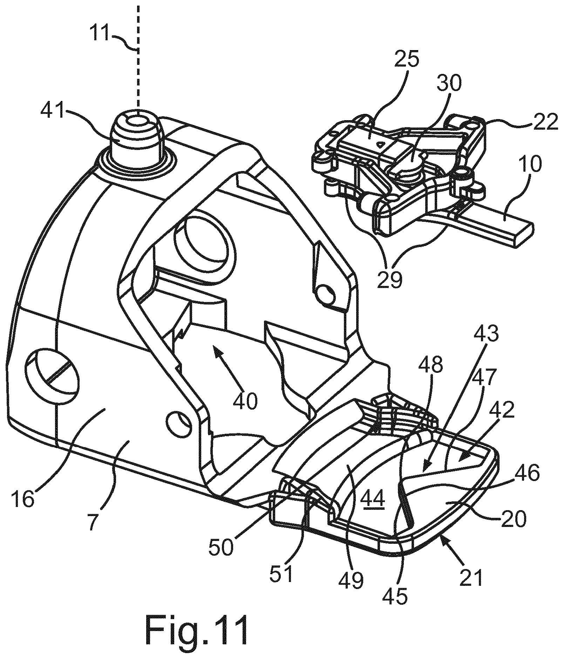

In Fig. 11 ist das Mitnehmerteil 7 im Detail dargestellt, nämlich zusammen mit dem Zwischenstück 22, dem Auslöserelement 10 sowie dem Schiebeelement 25. Wie aus Fig. 11 hervorgeht, ist der Grundkörper 16 des Mitnehmerteils 7 als hohler Körper ausgeführt, welcher einen Hohlraum 40 aufweist, welcher durchgängig ausgebildet ist. Durch den Hohlraum 40 hindurch erstreckt sich der Rastbolzen 17 (siehe Fig. 4). Von dem Grundkörper 16 steht ein Zapfen 41 ab, über welchen das Mitnehmerteil 7 schwenkbar gelagert ist und welcher die Schwenkachse 11 definiert.

An einer der Seite 21 bzw. den dort angebrachten Kontaktelementen 8 gegenüberliegenden Seite 42 des Arms 20 ist eine Kulisse 43 ausgebildet, welche eine Führung für den Zapfen 31 des Auslöseelements 10 darstellt. Dabei ist an der Seite 42 des Arms 20 eine Vertiefung 44 ausgebildet, welche durch eine Wandung 45 begrenzt ist, welche die Kulisse 43 bildet. Die Wandung 45 und somit die Kulisse 43 hat die Form eines Dreiecks und weist dabei einen ersten Kulissenabschnitt 46 und einen zweiten Kulissenabschnitt 47 auf, welche spitzenförmig zusammengeführt sind. Es handelt sich hier um lineare Kulissenabschnitte 46, 47, die miteinander einen Winkel einschließen, welcher beispielsweise in einem Wertebereich von 60° bis 120° liegen kann. Dieser Winkel kann beispielsweise 90° betragen.

An der Wandung 45 liegt dann der Zapfen 31 des Auslöseelements 10 an, welcher entlang der Kulisse 43 geführt wird und dabei in der Vertiefung liegt. Befindet sich der Betätigungshebel 2 in der Ausgangsstellung, so liegt der Zapfen 31 des Auslöseelements 10 an einer Spitze 48 der Kulisse 43. Befindet sich der Betätigungshebel 2 hingegen in der Betätigungsstellung, so liegt der Zapfen 31 an dem anderen Ende des jeweiligen Kulissenabschnitts 46, 47, nämlich abhängig davon, in welche Richtung der Betätigungshebel 2 geschwenkt wird. das Zungenelement 29 des Auslöseelements 10 gleitet dabei an einer Fläche 49 des Arms 20, welche durch die Stege 50, 51 beidseitig begrenzt ist. An den Stegen 50 bzw. 51 wird das Mitnehmerteil 7 durch das Zungenelement 29 des Auslöselements 10 beim Rückstellen in die Ausgangsstellung gedrückt. Die Rückstellung des Mitnehmerteils 7 erfolgt also durch Drücken an dem jeweiligen Steg 50, 51 und zwar mittels des Zungenelements 29.

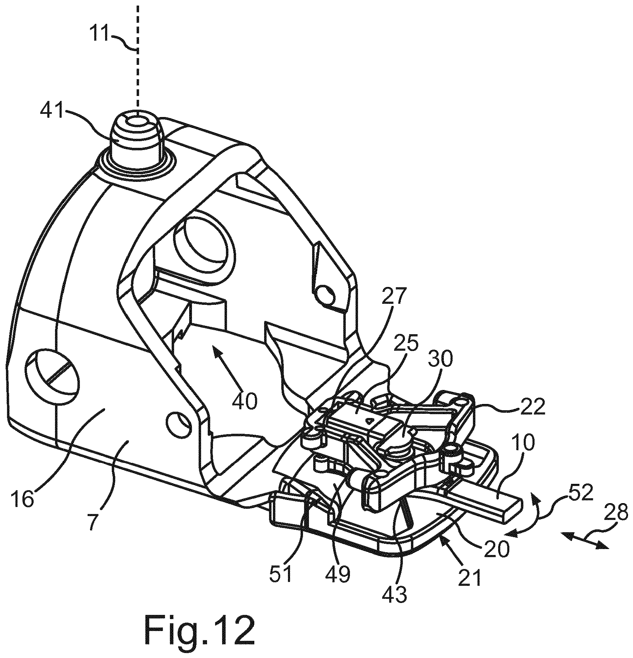

In Fig. 12 ist das Mitnehmerteil 7 zusammen mit dem daran angeordneten Auslöseelement 10 und dem Zwischenstück 22 dargestellt. Der Zapfen 31 des Auslöselements 10 ist dabei dem Arm 20 zugewandt und gleitet an der Kulisse 41. Wie bereits ausgeführt, kann das Auslöseelement 10 sowohl um die Schwenkachse 35 (siehe Fig. 6) geschwenkt werden, nämlich gemäß der Pfeildarstellung 52, als auch in der Schieberichtung 28 verschoben werden. In der Schieberichtung 28 ist das Auslöseelement 10 mit der Federkraft des Federelements 27 vorgespannt.

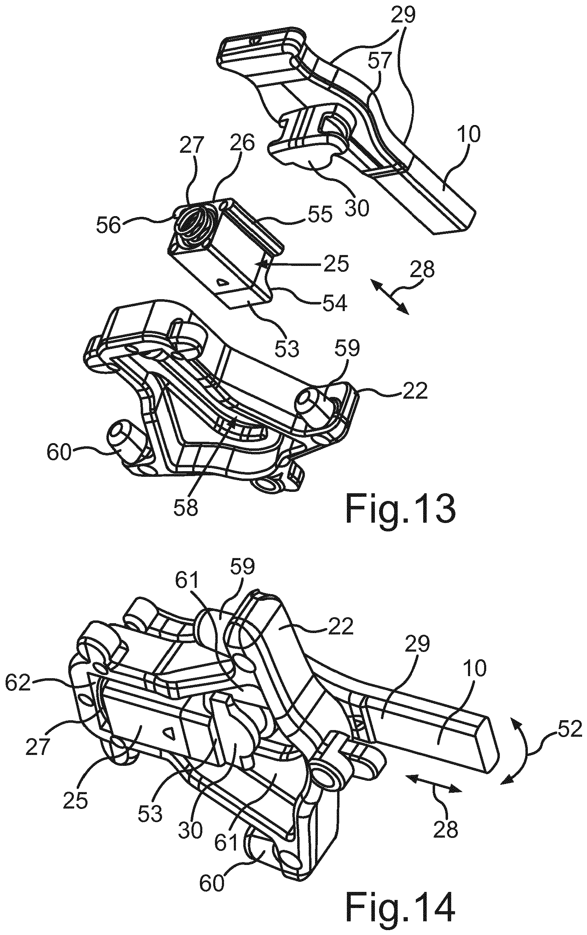

Bezugnehmend nun auf die Figuren 13 bis 19 wird die Ausgestaltung des Auslöseelements 10 sowie des Zwischenstücks 22, wie auch des Schiebeelements 25 näher erläutert. In Fig. 13 ist dabei eine separate Darstellung des Auslöseelements 10 sowie des Schiebeelements 25 und des Zwischenstücks 22 gezeigt. Wie bereits ausgeführt, weist das Schiebeelement 25 eine axiale Hülse 26 auf, in welche das Federelement 27 aufgenommen ist. Das Schiebeelement 25 weist einen in Schieberichtung 28 weisenden Fortsatz 53 auf, welcher wiederum eine Schräge 54 aufweist. Das Schiebeelement 25 weist außerdem zwei seitlich abstehende Kragen 55, 56 auf, über welche das Schiebeelement 25 gelagert ist.

Wie bereits ausgeführt, weist das Auslöseelement 10 ein länglich ausgeführtes Zungenelement 29 auf, von welchem ein Lagerteil 30 senkrecht absteht. An einem Außenumfang des Lagerteils 30 ist eine Nut 57 in Umfangsrichtung ausgebildet, welche im Ausführungsbeispiel insgesamt die Form eines Halbkreises aufweist.

Das Zwischenstück 22 weist eine Durchgangsöffnung 58 auf. Außerdem sind an dem Zwischenstück 22 zwei Zapfen 59, 60 ausgebildet, welche zum Abstützen der oben genannten Überschaltfedern 33, 34 dienen. Diese Zapfen 59, 60 weisen ebenfalls in Schieberichtung 28.

Wie aus Fig. 14 hervorgeht, erstreckt sich das Lagerteil 30 durch die Durchgangsöffnung 58 des Zwischenstücks 22 hindurch, sodass das Lagerteil 30 die Rückseite des Zwischenstücks 22 hintergreift. An dem Zwischenstück 22 ist dabei eine Führungsfläche 61 ausgebildet, an welcher das Lagerteil 30 anliegt und dort gleitet. Das Lagerteil 30 hintergreift also die Führungsfläche 61, wobei sich das länglich ausgeführte Zungenelement 29 auf der gegenüberliegenden Seite des Zwischenstücks 22 befindet. Ein Rand der Durchgangsöffnung 58 des Zwischenstücks 22 greift dabei in die Nut 57 des Lagerteils 30.

Das Schiebeelement 25 erstreckt sich ebenfalls durch die gemeinsame Durchgangsöffnung 58 hindurch und ist einerseits über das Federelement 27 an einer die Durchgangsöffnung 58 begrenzenden Wandung 62 des Zwischenstücks 22 und andererseits an dem Lagerteil 30 abgestützt. Andererseits ist das Auslöseelement 10 - wie bereits ausgeführt - an der Kulisse 43 des Mitnehmerteils 7 abgestützt, siehe Fig. 11. Sowohl das Schiebeelement 25 als auch das Auslöseelement 10 sind hier in der Schieberichtung 28 senkrecht zur Schwenkachse 11 verschiebbar gelagert und mit der Federkraft des Federelements 27 vorgespannt. Das Schiebeelement 25 liegt also an dem Auslöseelement 10 spielfrei an.

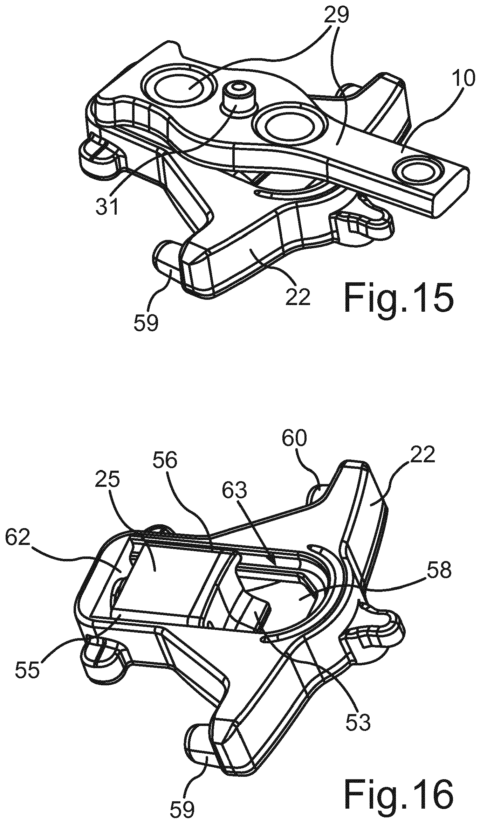

In Fig. 15 ist die gegenüberliegende Seite des Auslöseelements 10 dargestellt. Hier ist der Zapfen 31 besonders gut erkennbar, welcher an der Kulisse 43 gelagert ist. Über den Zapfen 31 ist das Auslöseelement 10 an der Kulisse 43 abgestützt.

Wie aus Fig. 16 hervorgeht, weist das Zwischenstück 22 an einer der Führungsfläche 61 gegenüberliegenden Seite eine weitere Führungsfläche 63 auf, an welcher die Kragen 55, 56 des Schiebeelements 25 anliegen und an welcher somit das Schiebeelement 25 verschiebbar gelagert ist. Der Fortsatz 53 des Schiebeelements 25 befindet sich dabei auf der gegenüberliegenden Seite des Zwischenstücks 22 bzw. jenseits der Durchgangsöffnung 58. Einerseits ist das Schiebeelement 25 somit über die Kragen 55, 56 an der Führungsfläche 63 gehalten; andererseits ist das Schiebeelement 25 über den Fortsatz 53 an dem Lagerteil 30 des Auslöseelements 10 abgestützt, so dass das Lagerteil 30 zwischen dem Fortsatz 53 und der Führungsfläche geklemmt ist.

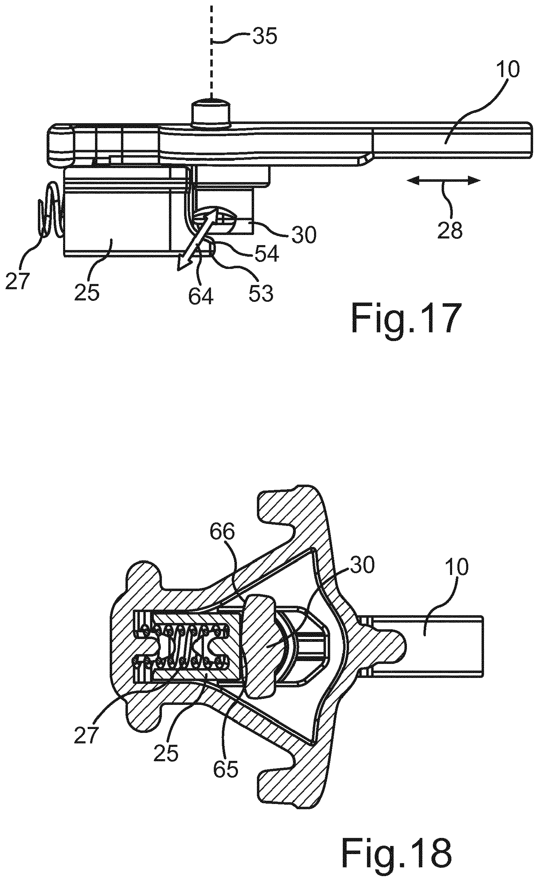

Bezugnehmend nun auf Fig. 17 liegt das Lagerteil 30 an der Schräge 54 des Fortsatzes 53 des Schiebelements 25 an. Zwischen den jeweiligen, einander zugewandten Stirnseiten des Schiebeelements 25 einerseits und des Lagerteils 30 andererseits ist somit ein kleiner Luftspalt ausgebildet bzw. diese Stirnseiten sind in einem geringen Abstand zueinander angeordnet. Das Lagerteil 30 steht in Kontakt lediglich mit der Schräge 54, sodass auf das Lagerteil 30 eine Federkraft 64 aufgebracht wird, welche eine Kraftkomponente parallel zur Schwenkachse 35 aufweist. Somit ist auch in Richtung parallel zur Schwenkachse 35 eine spielfreie Anordnung ermöglicht. Die Federkraft 64 wirkt also auf das Auslöseelement 10 sowohl in der Schieberichtung 28 als auch entlang der Schwenkachse 35, sodass mit lediglich einem einzigen Federelement 27 zwei unterschiedliche Wirkungsrichtungen erzielt werden.

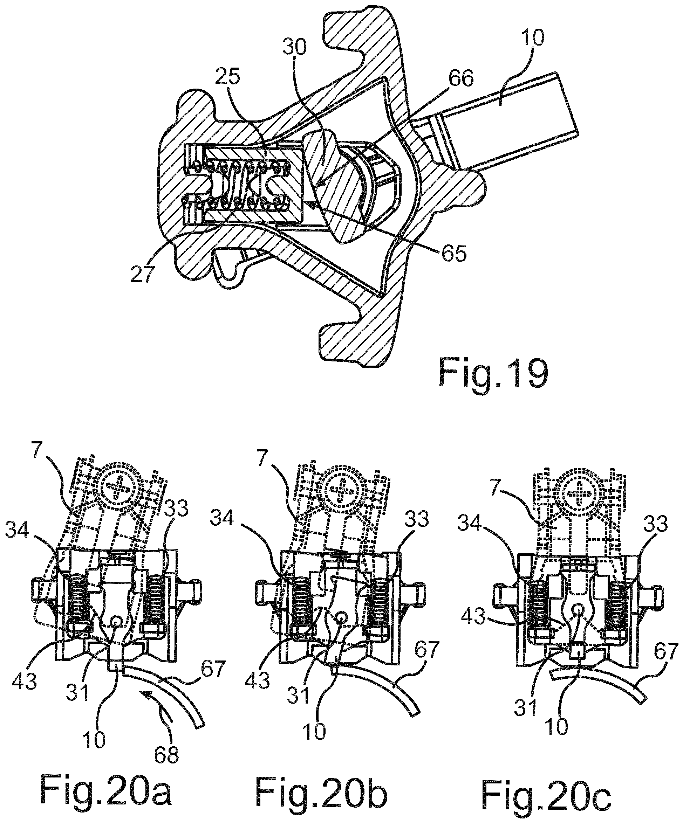

In den Figuren 18 und 19 ist eine schematische Draufsicht auf die Anordnung noch einmal dargestellt, wobei in Fig. 18 das Auslöseelement 10 sich in einer Ruhestellung befindet, während das Auslöseelement 10 in Fig. 19 in einer Auslösestellung gezeigt ist. Zu erkennen sind auch jeweilige Stirnseiten 65, 66 des Schiebeelements 25 einerseits und des Lagerteils 30 andererseits, welche einander zugewandt sind. Die beiden Stirnseiten 65, 66 weisen jeweils eine Krümmung auf: Im Ausführungsbeispiel weist das Schiebeelement 25 eine konvexe Stirnseite 65 auf, während die Stirnseite 66 des Lagerteils 30 konkav ausgebildet ist und quasi in die konvexe Stirnseite 65 einragt. In einer Ausführungsform ist dabei vorgesehen, dass der Radius der Krümmung der Stirnseite 65 des Schiebelements 25 größer oder gleich dem Radius der Krümmung des Lagerteils 30 ist. Somit können Klatschgeräusche bei der Rückstellung des Betätigungshebels 2 verhindert werden.

In der in Fig. 19 dargestellten Auslösestellung des Auslöseelements 10 drückt dieses Auslöseelement 10 das Mitnehmerteil 7 an dem jeweiligen Steg 50, 51, sodass das Mitnehmerteil 7 in die Ausgangsstellung gebracht wird.

Bezugnehmend nun auf die Figuren 20a bis 20c wird ein Auslösevorgang des Betätigungshebels 2 bzw. des Mitnehmerteils 7 näher erläutert. In Fig. 20a befindet sich das Mitnehmerteil 7 in der Betätigungsstellung, in welcher der Blinker aktiviert ist. Nun dreht der Fahrer sein Lenkrad, sodass ein mit der Lenkspindel verbundenes Element 67 in Drehrichtung des Lenkrades gemäß der Pfeildarstellung 68 entlang eines Bogens bewegt wird. Das Element 67 betätigt dann das Auslöseelement 10, welches nun aus der in Fig. 20a dargestellten Ruhestellung in eine in Fig. 20b dargestellte Auslösestellung verschwenkt wird, nämlich um die Schwenkachse 35. In dieser Stellung drückt das Auslöseelement 10 das Mitnehmerteil 7, sodass das Mitnehmerteil 7 wieder in die Ausgangsstellung bewegt wird. Dabei gleitet der Zapfen 31 entlang der Kulisse 43, sodass das Auslöseelement 10 auch ein wenig in der Schieberichtung 28 verschoben wird. In Fig. 20c ist die Ausgangsstellung des Mitnehmerteils 7 dargestellt, wobei das Auslöselement 10 sich wieder in der Ruhestellung befindet.

## Patentansprüche

1. Lenkstockschaltereinrichtung (1) für ein Kraftfahrzeug, mit einem Mitnehmerteil (7), mit welchem ein Betätigungshebel (2) verbindbar ist und welches um eine Schwenkachse (11) zwischen einer Ausgangsstellung und einer Betätigungsstellung schwenkbar gelagert ist, wobei das Mitnehmerteil (7) einen sich senkrecht zur Schwenkachse (11), insbesondere in Richtung zu einer Lenkspindel hin, erstreckenden und von einem Grundkörper (16) des Mitnehmerteils (7) abstehenden Arm (20) aufweist, wobei an einer Seite (21) des Arms (20) ein elektrisches Kontaktelement (8) angeordnet ist,
welches in der Betätigungsstellung mit einem weiteren Kontaktelement elektrisch koppelbar ist, und mit einer Rückstellvorrichtung (6) mit einem Auslöseelement (10), welches zum Rückstellen des Mitnehmerteils (7) und hierdurch des Betätigungshebels (2) aus der Betätigungsstellung in die Ausgangsstellung ausgebildet ist, wobei
das Auslöseelement (10) auf einer dem elektrischen Kontaktelement (8) gegenüberliegenden Seite (42) des Arms (20) angeordnet ist, **dadurch gekennzeichnet, dass**.
die Lenkstockschaltereinrichtung (1) eine Platine (9) aufweist, an welcher das weitere Kontaktelement angeordnet ist, und dass der Arm (20) zwischen der Platine (9) einerseits und dem Auslöseelement (10) andererseits angeordnet ist

2. Lenkstockschaltereinrichtung (1) nach Anspruch 1,
**dadurch gekennzeichnet, dass**
an dem Arm (20) eine Führung (43), insbesondere eine Kulisse, für einen Zapfen (31) des Auslöseelements (10) ausgebildet ist, entlang welcher der Zapfen (31) beim Bewegen des Betätigungshebels (2) zwischen der Ausgangsstellung und der Betätigungsstellung bewegbar ist.

3. Lenkstockschaltereinrichtung (1) nach Anspruch 2,
**dadurch gekennzeichnet, dass**
die Führung (43) an einer Seite des Arms (20) ausgebildet ist, welche dem elektrischen Kontaktelement (8) gegenüberliegt.

4. Lenkstockschaltereinrichtung (1) nach einem der vorhergehenden Ansprüche,
**dadurch gekennzeichnet, dass**
die Rückstellvorrichtung (6) an einem Rastteil (18) angeordnet ist, welches eine Raststruktur (23) zum Einrasten des Betätigungshebels (2) aufweist.

5. Lenkstockschaltereinrichtung (1) nach einem der vorhergehenden Ansprüche,
**dadurch gekennzeichnet, dass**
das Auslöseelement (10) an einem Zwischenstück (22) zwischen einer Ruhestellung und einer Auslösestellung, in welcher das Mitnehmerteil (7) in die Ausgangsstellung bringbar ist, um eine Schwenkachse (35) schwenkbar gelagert ist, wobei das Auslöseelement (10) an dem Zwischenstück (22) außerdem in einer Schieberichtung (28) senkrecht zur Schwenkachse (35) verschiebbar gelagert ist, und wobei ein Federelement (27) zum Erzeugen einer parallel zur Schieberichtung (28) wirkenden Federkraft vorgesehen ist, mit welcher das Auslöseelement (10) an dem Zwischenstück (22) vorgespannt angeordnet ist.

6. Lenkstockschaltereinrichtung (1) nach Anspruch 5,
**dadurch gekennzeichnet, dass**
das Zwischenstück (22) eine senkrecht zur Schwenkachse (11) ausgebildete Führungsfläche (61) aufweist, an welcher das Auslöseelement (10) gelagert ist, und dass Mittel (25, 27) vorgesehen sind, welche das Auslöseelement (10) gegen die Führungsfläche (61) in Richtung parallel zur Schwenkachse (35) drücken.

7. Lenkstockschaltereinrichtung (1) nach einem der vorhergehenden Ansprüche,
**dadurch gekennzeichnet, dass**
die Lenkstockschaltereinrichtung (1) eine Überschaltsicherungseinrichtung (32) mit einer Überschaltfeder (33, 34) aufweist, welche in einem Überschaltfall eine Bewegung des Zwischenstücks (22) relativ zu dem Betätigungshebel (2) ermöglicht.

8. Lenkstockschaltereinrichtung (1) nach Anspruch 7 und Anspruch 5 oder 6,
**dadurch gekennzeichnet, dass**
die Überschaltfeder (33, 34) und das Federelement (27) in einer Richtung senkrecht zur Schieberichtung (28) nebeneinander angeordnet sind.

9. Kraftfahrzeug mit einer Lenkstockschaltereinrichtung (1) nach einem der vorhergehenden Ansprüche.

## Claims

1. Steering-column switch unit (1) for a motor vehicle, having a driver part (7) to which an actuating lever (2) can be connected and which is mounted so as to be pivotable about a pivot axis (11) between an initial position and an actuated position, wherein the driver part (7) has an arm (20) which extends perpendicular to the pivot axis (11), in particular in the direction of a steering spindle, and which projects from a main body (16) of the driver part (7), wherein, on one side (21) of the arm (20), there is arranged an electrical contact element (8) which, in the actuated position, can be electrically coupled to a further contact element, and having a resetting device (6) with a triggering element (10) which is designed for resetting the driver part (7), and thus the actuating lever (2), from the actuated position into the initial position, wherein
the triggering element (10) is arranged on a side (42) of the arm (20) situated opposite the electrical contact element (8),
**characterized in that**
the steering-column switch unit (1) has a printed circuit board (9) on which the further contact element is arranged, and **in that** the arm (20) is arranged between the printed circuit board (9) at one side and the triggering element (10) at the other side.

2. Steering-column switch unit (1) according to Claim 1,
**characterized in that**
a guide (43), in particular a slotted guide, for a peg (31) of the triggering element (10) is formed on the arm (20), along which guide the peg (31) can move during the movement of the actuating lever (2) between the initial position and the actuated position.

3. Steering-column switch unit (1) according to Claim 2,
**characterized in that**
the guide (43) is formed on a side of the arm (20) situated opposite the electrical contact element (8).

4. Steering-column switch unit (1) according to one of the preceding claims,
**characterized in that**
the resetting device (6) is arranged on a detent part (18) which has a detent structure (23) for the engagement of the actuating lever (2) with detent action.

5. Steering-column switch unit (1) according to one of the preceding claims,
**characterized in that**
the triggering element (10) is mounted on an intermediate piece (22) so as to be pivotable about a pivot axis (35) between a rest position and a triggering position in which the driver part (7) can be moved into the initial position, wherein the triggering element (10) is furthermore mounted on the intermediate piece (22) so as to be displaceable in a sliding direction (28) perpendicular to the pivot axis (35), and wherein a spring element (27) is provided for generating a spring force which acts parallel to the sliding direction (28) and with which the triggering element (10) is arranged under preload on the intermediate piece (22).

6. Steering-column switch unit (1) according to Claim 5,
**characterized in that**
the intermediate piece (22) has a guide surface (61) which is formed perpendicularly to the pivot axis (11) and on which the triggering element (10) is mounted, and **in that** means (25, 27) are provided which press the triggering element (10) against the guide surface (61) in a direction parallel to the pivot axis (35).

7. Steering-column switch unit (1) according to one of the preceding claims,
**characterized in that**
the steering-column switch unit (1) has a switch override protection unit (32) with a switch override spring (33, 34) which, in a switch override situation, permits a movement of the intermediate piece (22) relative to the actuating lever (2).

8. Steering-column switch unit (1) according to Claim 7 and Claim 5 or 6,
**characterized in that**
the switch override spring (33, 34) and the spring element (27) are arranged adjacent to one another in a direction perpendicular to the sliding direction (28) .

9. Motor vehicle having a steering-column switch unit (1) according to one of the preceding claims.

## Revendications

1. Dispositif de commutation de colonne de direction (1) destiné à un véhicule automobile, ledit dispositif comprenant une partie formant entraîneur (7) à laquelle un levier d'actionnement (2) peut être relié et qui est montée de manière pivotante sur un axe de pivotement (11) entre une position de départ et une position d'actionnement, la partie formant entraîneur (7) comportant un bras (20) qui s'étend perpendiculairement à l'axe de pivotement (11), notamment en direction d'une broche de direction, et qui fait saillie d'un corps de base (16) de la partie formant entraîneur (7), un élément de contact électrique (8) étant disposé sur un côté (21) du bras (20) et pouvant être couplé électriquement dans la position d'actionnement à un autre élément de contact, et un dispositif de réinitialisation (6) pourvu d'un élément de déclenchement (10) qui est conçu pour réinitialiser la partie formant entraîneur (7) et ainsi le levier d'actionnement (2) de la position d'actionnement à la position de départ,
l'élément de déclenchement (10) étant disposé sur un côté (42) du bras (20) qui est opposé à l'élément de contact électrique (8),
**caractérisé en ce que**
le dispositif de commutation de colonne de direction (1) comporte une carte de circuit imprimé (9) sur laquelle l'autre élément de contact est disposé et **en ce que** le bras (20) est disposé entre la carte de circuit imprimé (9) d'une part et l'élément de déclenchement (10) d'autre part.

2. Dispositif de commutation de colonne de direction (1) selon la revendication 1,
**caractérisé en ce que**
un guide (43), en particulier une coulisse, est formé sur le bras (20) et est destiné à une broche (31) de l'élément de déclenchement (10), guide le long duquel la broche (31) peut être déplacée entre la position de départ et la position d'actionnement lors du déplacement du levier d'actionnement (2).

3. Dispositif de commutation de colonne de direction (1) selon la revendication 2,
**caractérisé en ce que**
le guide (43) est formé sur un côté du bras (20) qui est opposé à l'élément de contact électrique (8).

4. Dispositif de commutation de colonne de direction (1) selon l'une des revendications précédentes,
**caractérisé en ce que**
le dispositif de réinitialisation (6) est disposé sur une partie d'encliquetage (18) qui comporte une structure d'encliquetage (23) destinée à encliqueter le levier d'actionnement (2).

5. Dispositif de commutation de colonne de direction (1) selon l'une des revendications précédentes,
**caractérisé en ce que**
l'élément de déclenchement (10) peut être monté sur une pièce intermédiaire (22) de manière à pouvoir pivoter sur un axe de pivotement (35) entre une position de repos et une position de déclenchement dans laquelle la partie formant entraîneur (7) peut être amenée dans la position de départ, l'élément de déclenchement (10) étant en outre monté sur la pièce intermédiaire (22) de manière à pouvoir coulisser dans une direction de coulissement (28) perpendiculairement à l'axe de pivotement (35), et un élément à ressort (27) étant prévu pour générer une force de ressort qui agit parallèlement à la direction de coulissement (28) et avec laquelle l'élément de déclenchement (10) est disposé de manière précontrainte sur la pièce intermédiaire (22).

6. Dispositif de commutation de colonne de direction (1) selon la revendication 5,
**caractérisé en ce que**
la pièce intermédiaire (22) comporte une surface de guidage (61) qui est formée perpendiculairement à l'axe de pivotement (11) et sur laquelle l'élément de déclenchement (10) est monté, et **en ce que** des moyens (25, 27) sont prévus qui pressent l'élément de déclenchement (10) contre la surface de guidage (61) dans une direction parallèle à l'axe de pivotement (35) .

7. Dispositif de commutation de colonne de direction (1) selon l'une des revendications précédentes,
**caractérisé en ce que**
le dispositif de commutation de colonne de direction (1) comporte un dispositif de protection contre le dépassement (32) qui est pourvu d'un ressort de dépassement (33, 34) et qui permet, en cas de dépassement, de déplacer la pièce intermédiaire (22) par rapport au levier d'actionnement (2).

8. Dispositif de commutation de colonne de direction (1) selon la revendication 7 et la revendication 5 ou 6,
**caractérisé en ce que**
le ressort de dépassement (33, 34) et l'élément à ressort (27) sont disposés côte à côte dans une direction perpendiculaire à la direction de coulissement (28).

9. Véhicule automobile muni d'un dispositif de commutation de colonne de direction (1) selon l'une des revendications précédentes.
